# EUROPÄISCHE PATENTSCHRIFT

(11) **EP 1 542 923 B1**
(45) Veröffentlichungstag und Bekanntmachung des Hinweises auf die Patenterteilung: **28.12.2005**
(21) Anmeldenummer: 03769275.3
(22) Anmeldetag: 12.09.2003
(51) Int. Cl.: C01B 7/00, B01J 23/46

(54) **FESTBETTVERFAHREN ZUR HERSTELLUNG VON CHLOR DURCH KATALYTISCHE GASPHASEN-OXIDATION VON CHLORWASSERSTOFF**
FIXED-BED METHOD FOR PRODUCTION OF CHLORINE BY CATALYTIC GAS-PHASE OXIDATION OF HYDROGEN CHLORIDE
PROCEDE A LIT FIXE POUR PRODUIRE DU CHLORE PAR OXYDATION CATALYTIQUE EN PHASE GAZEUSE DE CHLORURE D'HYDROGENE

(30) Priorität: 12.09.2002 DE 10242400
(43) Veröffentlichungstag der Anmeldung: 22.06.2005
(73) Patentinhaber: BASF Aktiengesellschaft, 67056 Ludwigshafen (DE)
(72) Erfinder: WALSDORFF, Christian, 67059 Ludwigshafen (DE); FIENE, Martin, 67150 Niederkirchen (DE); ADAMI, Christoph, 69469 Weinheim (DE); STRÖFER, Eckhard, 68163 Mannheim (DE); HARTH, Klaus, 67317 Altleiningen (DE)
(74) Vertreter: Isenbruck, Günter
(86) Internationale Anmeldenummer: PCT/EP2003/010181
(87) Internationale Veröffentlichungsnummer: WO 2004/026761

(56) Entgegenhaltungen:
- EP-A- 0 233 773
- EP-A- 0 936 184
- US-A- 2 592 598

## Beschreibung

Die Erfindung betrifft ein Festbettverfahren zur Herstellung von Chlor durch katalytische Gasphasen-Oxidation von Chlorwasserstoff.

In dem von Deacon 1868 entwickelten Verfahren der katalytischen Chlorwasserstoff-Oxidation wird Chlorwasserstoff mit Sauerstoff in einer exothermen Gleichgewichtsreaktion zu Chlor oxidiert. Durch Überführung von Chlorwasserstoff in Chlor kann die Chlorherstellung von der Natronlaugeherstellung durch Chloralkalielektrolyse entkoppelt werden. Eine solche Entkoppelung ist attraktiv, da weltweit der Chlorbedarf stärker als die Nachfrage nach Natronlauge wächst. Zudem fällt Chlorwasserstoff in großen Mengen beispielsweise bei Phosgenierungsreaktionen, etwa bei der Isocyanatherstellung, als Koppelprodukt an. Der bei der Isocyanatherstellung gebildete Chlorwasserstoff wird überwiegend in der Oxichlorierung von Ethylen zu 1,2-Dichlorethan eingesetzt, das zu Vinylchlorid und schließlich zu PVC weiterverarbeitet wird. Durch den Deacon-Prozess wird somit auch eine Entkoppelung von Isocyanat-Herstellung und Vinylchlorid-Herstellung ermöglicht.

In der EP-B 0 233 773 wird die katalytische Chlorwasserstoff-Oxidation an pulverförmigen Chromoxidkatalysatoren in einem Wirbelbettverfahren beschrieben.

Wirbelbettverfahren zeichnen sich durch die Möglichkeit einer sehr isothermen Temperaturführung aus. Dabei kann die Bildung lokaler Überhitzungen des Katalysatorbetts, die Ausbildung sogenannter "hot spots", weitgehend vermieden werden. Wirbelbettverfahren weisen jedoch Nachteile auf. Dazu zählen die Schwierigkeiten beim Up-Scaling, ein zum Teil erheblicher Austrag von Katalysatormaterial mit den Reaktionsgasen während des Betriebs der Wirbelbettreaktoren, sowie die durch Verkleben von Katalysatorteilchen bedingte Instabilität des Wirbelbetts.

Festbettverfahren weisen die genannten Nachteile nicht auf. Dazu werden in der Regel Hordenreaktoren mit Zwischenkühlung oder Rohrbündelreaktoren eingesetzt. EP-A 0 936 184 beschreibt die Durchführung der Deacon-Reaktion an einem festen Katalysatorbett unter Verwendung von Rutheniumkatalysatoren. Bei der Durchführung exothermer Umsetzungen an einem Katalysator-Festbett kommt es jedoch in der Regel zur Ausbildung von "hot spots".

Aufgabe der Erfindung ist es, ein verbessertes Verfahren zur Herstellung von Chlor aus Chlorwasserstoff bereitzustellen, das den Nachteilen des Standes der Technik abhilft.

Gelöst wird die Aufgabe durch ein Verfahren zur Herstellung von Chlor durch katalytische Gasphasen-Oxidation von Chlorwasserstoff an einem Katalysator-Festbett mit den Schritten:
a) ein Chlorwasserstoff enthaltender Einspeisungsgastrom I und ein Sauerstoff enthaltender Einspeisungsgasstrom II werden bereitgestellt;
b) der Einspeisungsgastrom I, der Einspeisungsgasstrom II, gegebenenfalls ein Chlorwasserstoff enthaltender Rückstrom Ia, gegebenenfalls ein Sauerstoff enthaltender Rückstrom IIa und ein Rückstrom III werden in eine Oxidationszone eingespeist und Chlorwasserstoff wird in Gegenwart eines im Festbett angeordneten Katalysators zu Chlor oxidiert, wobei ein Produktgasstrom IV erhalten wird, der Chlor, nicht umgesetzten Sauerstoff, nicht umgesetzten Chlorwasserstoff und Wasserdampf enthält;
c) der Rückstrom III wird dem Produktgasstrom IV entnommen und in die Oxidationszone rückgeführt, wobei ein Produktgasstrom IVa verbleibt.

In einer ersten Verfahrensstufe a) wird ein Einspeisungsgasstrom I enthaltend Chlorwasserstoff bereitgestellt. Chlorwasserstoff fällt beispielsweise bei der Herstellung aromatischer Polyisocyanate wie Toluylendüsocyanat und Diphenylmethandiisocyanat (MDI) aus den entsprechenden Polyaminen und Phosgen, bei der Herstellung von Säurechloriden, bei der Chlorierung von Aromaten, bei der Herstellung von Vinylchlorid sowie bei der Herstellung von Polycarbonaten an. Dieser Chlorwasserstoff kann Kohlenwasserstoffe oder Chlorkohlenwasserstoffe als Verunreinigungen, beispielsweise in Mengen von 100 bis 3000 ppm enthalten. Daneben können weitere Gasbestandteile enthalten sein wie Kohlenmonoxid, Kohlendioxid, Stickstoff sowie weitere Inertgase, typischer Weise in Mengen von 0 bis 1 Vol.-%.

Die Verunreinigungen können beispielsweise durch katalytische Verbrennung der Kohlenwasserstoffe und Chlorkohlenwasserstoffe in dem Einsatzgasstrom oder durch Absorption der Kohlenwasserstoffe und Chlorkohlenwasserstoffe an einem geeigneten Absorptionsmittel aus dem Einsatzgasstrom entfernt werden.

Ferner wird ein Einspeisungsgasstrom II enthaltend Sauerstoff bereitgestellt. Der Einspeisungsgasstrom II kann aus reinem Sauerstoff, technischem Sauerstoff, beispielsweise 94 vol.-%igen oder 98 vol.-%igen technischem Sauerstoff, Luft oder anderen Sauerstoff/Inertgas-Gemischen bestehen. Luft ist wegen des hohen Inertgasanteils, reiner Sauerstoff aus Kostengründen weniger bevorzugt.

In einem Verfahrensschritt b) werden mindestens der Einspeisungsgastrom I, der Einspeisungsgasstrom II und ein Rückstrom III in eine Oxidationszone eingespeist und wird Chlorwasserstoff in Gegenwart eines im Festbett angeordneten Katalysators zu Chlor oxidiert, wobei ein Produktgasstrom IV erhalten wird, der Chlor, nicht umgesetzten Sauerstoff, nicht umgesetzten Chlorwasserstoff und Wasserdampf enthält. Der Rückstrom III wird dabei dem bei der katalytischen Chlorwasserstoff-Oxidation gebildeten Produktgasstrom IV entnommen.

In einem Verfahrenschritt c) wird der Rückstrom III dem Produktgasstrom IV entnommen und in die Oxidationszone rückgeführt, wobei ein Produktgasstrom IVa verbleibt. Durch den Rückstrom III, der bereits die Produkte der katalytischen Chlorwasserstoff-Oxidation Chlor und Wasserdampf enthält, wird das der katalytischen Chlorwasserstoff-Oxidation zugeführte Einsatzgasgemisch durch sich inert verhaltende Anteile (Chlor und Wasserdampf) verdünnt. Dadurch wird die Exothermie der Reaktion auf einen größeren Gasvolumenstrom verteilt. Durch die Verdünnung wird insbesondere der Bildung von hotspots entgegengewirkt. Wegen der großen Wärmekapazität ist insbesondere die Gegenwart von Wasserdampf im Einsatzgasgemisch der katalytischen Chlorwasserstoffoxidation vorteilhaft.

Üblicherweise wird von dem Produktgasstrom IV soviel zurückgeführt, dass das Verhältnis Rückführstrom III zu verbleibendem Produktgasstrom IVa von 0,005 bis 3, bevorzugt von 0,2 bis 1,5 und besonders bevorzugt von 0,4 bis 1 beträgt.

Die Rückführung des Rückführstroms III kann mittels eines Kompressors erfolgen. Ist der Druckverlust über das Katalysator-Festbett gering, so kann auch der Einsatz eines Gebläses ausreichend sein. Stehen Einspeisungsgasstrom I, II und/oder Rückstrom IIa unter einem erhöhten Druck, beispielsweise von > 5 bar, so kann zur Rückführung eine Treibstrahldüse eingesetzt werden, mittels der der Rückstrom III von einem oder mehreren der Gasströme I, II bzw. IIa angesaugt wird. Der Rückführstrom III kann somit aus mehreren Strömen bestehen.

Bevorzugt ist ein Verfahren, bei dem der Einspeisungsgasstrom II technischen Sauerstoff, der durch Luftverflüssigung erhalten wird und somit unter einem hohen Eigendruck steht, enthält, und der Rückstrom III mittels einer Treibstrahldüse von dem Einspeisungsgasstrom II angesaugt wird. Der durch Luftverflüssigung erhaltene technische Sauerstoff kann unter einem Eigendruck von 30 bar oder mehr stehen.

In dem auch als Deacon-Prozess bekannten katalytischen Verfahren wird Chlorwasserstoff mit Sauerstoff in einer exothermen Gleichgewichtsreaktion zu Chlor oxidiert, wobei Wasserdampf anfällt. Übliche Reaktionstemperaturen liegen zwischen 150 und 500°C, übliche Reaktionsdrucke liegen zwischen 1 und 25 bar. Da es sich um eine Gleichgewichtsreaktion handelt, ist es zweckmäßig, bei möglichst niedrigen Temperaturen zu arbeiten, bei denen der Katalysator noch eine ausreichende Aktivität aufweist. Ferner ist es zweckmäßig, Sauerstoff in überstöchiometrischen Mengen einzusetzen. Üblich ist beispielsweise ein zwei- bis vierfacher Sauerstoff-Überschuss. Da keine Selektivitätsverluste zu befürchten sind, kann es wirtschaftlich vorteilhaft sein, bei relativ hohen Drücken und dementsprechend bei gegenüber Normaldruck längeren Verweilzeiten zu arbeiten.

Geeignete Katalysatoren enthalten Rutheniumoxid, Rutheniumchlorid oder andere Rutheniumverbindungen auf Siliziumdioxid, Aluminiumoxid, Titandioxid oder Zirkondioxid als Träger. Geeignete Katalysatoren können beispielsweise durch Aufbringen von Rutheniumchlorid auf den Träger und anschließendes Trocknen oder Trocknen und Calcinieren erhalten werden. Geeignete Katalysatoren können ergänzend zu oder an Stelle einer Rutheniumverbindung auch Verbindungen anderer Edelmetalle, beispielsweise Gold, Palladium, Platin, Osmium, Iridium, Silber, Kupfer oder Rhenium enthalten. Geeignete Katalysatoren können ferner Chrom(III)oxid enthalten.

Die katalytische Chlorwasserstoff-Oxidation wird erfindungsgemäß in einem oder mehreren Festbettreaktoren durchgeführt. Die Chlorwasserstoff-Oxidation kann mehrstufig durchgeführt werden.

Die katalytische Chlorwasserstoff-Oxidation kann adiabat oder bevorzugt isotherm oder annähernd isotherm, diskontinuierlich, bevorzugt kontinuierlich als Festbettverfahren, bevorzugt in Rohrbündelreaktoren an Heterogenkatalysatoren bei Reaktortemperaturen von 180 bis 500°C, bevorzugt 200 bis 400°C, besonders bevorzugt 220 bis 350°C und einem Druck von 1 bis 25 bar, bevorzugt 1,2 bis 20 bar, besonders bevorzugt 1,5 bis 17 bar und insbesondere 2,0 bis 15 bar durchgeführt werden.

Bei der isothermen oder annähernd isothermen Fahrweise können auch mehrere, also 2 bis 10, bevorzugt 2 bis 6, besonders bevorzugt 2 bis 5, insbesondere 2 bis 3 in Reihe geschaltete Reaktoren mit zusätzlicher Zwischenkühlung eingesetzt werden. Der Sauerstoff kann entweder vollständig zusammen mit dem Chlorwasserstoff vor dem ersten Reaktor oder über die verschiedenen Reaktoren verteilt zugegeben werden. Diese Reihenschaltung einzelner Reaktoren kann auch in einem Apparat zusammengeführt werden.

Eine bevorzugte Ausführungsform besteht darin, dass man eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit oder Edelstahl eingesetzt werden. Beim bevorzugten Einsatz von Katalysatorformkörpern sollte das Inertmaterial bevorzugt ähnliche äußere Abmessungen haben.

Als Katalysatorformkörper eignen sich beliebige Formen, bevorzugt sind Tabletten, Ringe, Zylinder, Sterne, Wagenräder oder Kugeln, besonders bevorzugt sind Ringe, Zylinder oder Sternstränge.

Als Heterogenkatalysatoren eignen sich insbesondere Rutheniumverbindungen oder Kupferverbindungen auf Trägermaterialen, die auch dotiert sein können, bevorzugt sind gegebenenfalls dotierte Rutheniumkatalysatoren. Als Trägermaterialen eignen sich beispielsweise Siliciumdioxid, Graphit, Titandioxid mit Rutil- oder Anatas-Struktur, Zirkondioxid, Aluminiumoxid oder deren Gemische, bevorzugt Titandioxid, Zirkondioxid, Aluminiumoxid oder deren Gemische, besonders bevorzugt γ- oder δ-Aluminiumoxid oder deren Gemische.

Die Kupfer- bzw. die Rutheniumträgerkatalysatoren können beispielsweise durch Tränkung des Trägermaterials mit wässrigen Lösungen von CuCl₂ bzw. RuCl₃ und gegebenenfalls eines Promotors zur Dotierung, bevorzugt in Form ihrer Chloride, erhalten werden. Die Formgebung des Katalysators kann nach oder bevorzugt vor der Tränkung des Trägermaterials erfolgen.

Zur Dotierung eignen sich als Promotoren Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Die Formkörper können anschließend bei Temperaturen von 100 bis 400°C, bevorzugt 100 bis 300°C beispielsweise unter einer Stickstoff-, Argon- oder Luftatmosphäre getrocknet und gegebenenfalls calciniert werden. Bevorzugt werden die Formkörper zunächst bei 100 bis 150°C getrocknet und anschließend bei 200 bis 400°C calciniert.

Der Umsatz an Chlorwasserstoff im einfachen Durchgang kann auf 15 bis 95 %, bevorzugt 40 bis 90 % begrenzt werden. Nicht umgesetzter Chlorwasserstoff kann nach Abtrennung teilweise oder vollständig in die katalytische Chlorwasserstoff-Oxidation zurückgeführt werden. Das Volumenverhältnis von Chlorwasserstoff zu Sauerstoff am Reaktoreintritt liegt in der Regel zwischen 1:1 und 20:1, bevorzugt zwischen 2:1 und 8:1, besonders bevorzugt zwischen 2:1 und 5:1.

Vorzugweise umfasst das erfindungsgemäße Verfahren weitere Verfahrensschritte der Auftrennung des Produktgasgemisches und der Aufreinigung der einzelnen Komponenten. Üblicherweise werden zusätzlich die Schritte d) bis g) durchgeführt, wobei
d) aus dem Produktgasstrom IVa Chlorwasserstoff und Wasser abgetrennt werden, wobei ein Gasstrom V erhalten wird;
e) der Gasstrom V getrocknet wird;
f) aus dem Gasstrom V ein Sauerstoff enthaltender Strom abgetrennt und gegebenenfalls zumindest teilweise als Sauerstoff enthaltender Rückstrom IIa in die Oxidationszone zurückgeführt wird, wobei ein chlorhaltiger Produktstrom VI verbleibt;
g) gegebenenfalls der chlorhaltige Produktstrom VI weiter aufgereinigt wird.

In der Verfahrenstufe d) werden aus dem Produktgasstrom IVa nicht umgesetzter Chlorwasserstoff und Wasserdampf abgetrennt. Dies kann durch Auskondensieren von wässriger Salzsäure aus dem Produktgasstrom IVa durch Abkühlung erfolgen. Chlorwasserstoff kann auch in verdünnter Salzsäure oder Wasser absorbiert werden.

In einer Ausführungsform der Erfindung wird die Abtrennstufe d) wie nachstehend beschrieben durchgeführt. In einer Verfahrenstufe d1) wird der Produktgasstrom IVa in einer Absorptionszone mit verdünnter Salzsäure der Konzentration c1 in Kontakt gebracht und Chlorwasserstoff in der verdünnten Salzsäure absorbiert, wobei eine Salzsäure der Konzentration c2 und ein Gasstrom V, der Chlor und Sauerstoff enthält, erhalten wird. In einer Verfahrensstufe d2) wird der absorbierte Chlorwasserstoff aus der Salzsäure der Konzentration c2 in einer Desorptionszone wieder freigesetzt. Der freigesetzte Chlorwasserstoff kann zumindest teilweise, vorzugsweise vollständig, als Chlorwasserstoff enthaltender Rückstrom Ia in die Oxidationszone zurückgeführt werden, wo aus dem rückgeführten Chlorwasserstoff weiteres Chlor gewonnen wird. Dabei wird eine verdünnte Salzsäure der Konzentration c1 als Absorptionsmittel zurückgewonnen, die zumindest teilweise in die Absorptionszone zurückgeführt wird.

Als Absorptionsmittel geeignet ist jede verdünnte Salzsäure, die nicht an Chlorwasserstoff gesättigt ist. Üblicher Weise wird ihre Konzentration c3 bis zu 25 Gew.-% Chlorwasserstoff, beispielsweise ca. 15 Gew.-% betragen. Die Absorptionstemperatur beträgt üblicher Weise von 0 bis 150 °C, vorzugsweise von 30 bis 100°C, der Absorptionsdruck beträgt üblicher Weise von 0,5 bis 20 bar, vorzugsweise von 1 bis 10 bar. Die Desorption wird vorzugsweise in einer Desorptionskolonne mit 3 bis 10 theoretischen Böden durchgeführt. Der Desorptionsdruck betragt üblicherweise von 0,3 bis 10 bar, vorzugsweise von 0,5 bis 5 bar.

Es wird ein Gasstrom V erhalten, der Chlor und Sauerstoff enthält oder im wesentlichen aus diesen Gasen besteht. Dieser enthält üblicher Weise noch Spuren von Feuchtigkeit. Üblicher Weise wird daher ein Trocknungsschritt e) durchgeführt, in dem der Gasstrom V durch Inkontaktbringen mit geeigneten Trocknungsmitteln von Feuchtigkeitsspuren befreit wird. Geeignete Trocknungsmittel sind beispielsweise konzentrierte Schwefelsäure, Molsiebe oder hygroskopische Adsorbentien.

In einer Verfahrensstufe f) wird aus dem Gasstrom V ein Sauerstoff enthaltender Strom abgetrennt, der zumindest teilweise als Sauerstoff enthaltender Rückstrom IIa in die Oxidationszone zurückgeführt werden kann. Die Sauerstoff Abtrennung erfolgt vorzugsweise durch Destillation, üblicher Weise bei einer Temperatur im Bereich von -20 bis +50 °C und einem Druck im Bereich von 1 bis 20 bar in einer Destillationskolonne mit 10 bis 100 theoretischen Böden. Der Sauerstoff enthaltende Rückstrom IIa steht häufig unter einem hohen Druck.

Es verbleibt ein chlorhaltiger Produktstrom VI, der nachfolgend weiter aufgereinigt werden kann.

Die Erfindung wird nachfolgend an der Figuren näher erläutert.

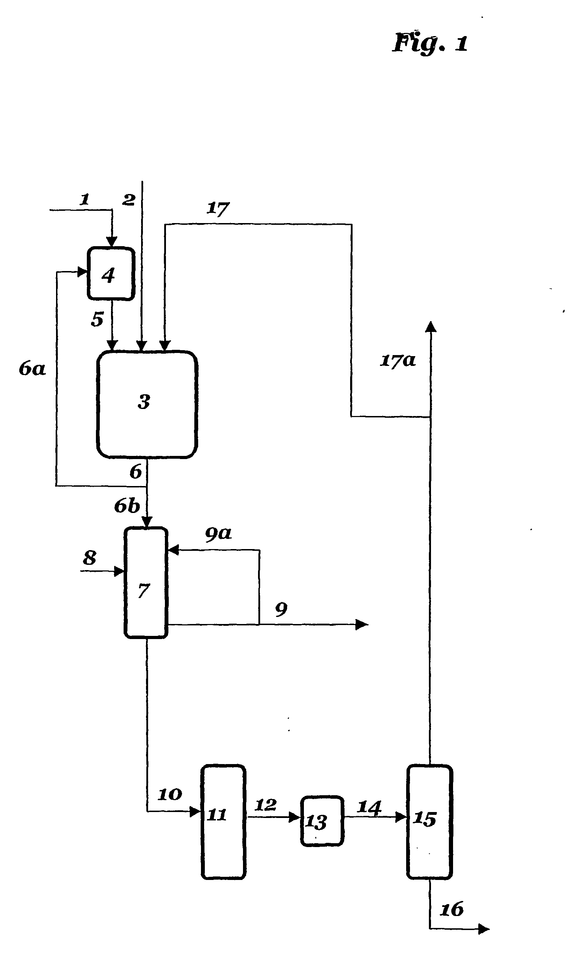

Die Figur 1 zeigt das Verfahrensfließbild des erfindungsgemäßen Verfahrens gemäß einer Ausführungsform.

Ein Sauerstoff enthaltender Einspeisungsgasstrom 1, ein Chlorwasserstoff enthaltender Einspeisungsstrom 2, ein Sauerstoff enthaltender Rückstrom 17 und ein Rückstrom 6a, der Produkte der Chlorwasserstoff-Oxidation enthält, werden in den Chlorwasserstoff-Oxidationsreaktor 3 eingespeist, in dem Chlorwasserstoff katalytisch zu Chlor oxidiert wird. Mittels der Treibstrahldüse 4 wird der Rückstrom 6a von dem Sauerstoff enthaltenden Strom 1 angesaugt und werden diese gemeinsam als Gasstrom 5 in den Reaktor 3 eingespeist. Als Einspeisungsgasstrom 1 wird beispielsweise 94 vol.-%iger Sauerstoff aus einer Druckwechselabsorption (technisch reiner Sauerstoff) oder durch Luftverflüssigung erhaltener Sauerstoff eingesetzt. Dieser steht unter einem hohen Druck, beispielsweise von 30 bar. Es wird ein Produktgasstrom 6 erhalten, der Chlor, nicht umgesetzten Sauerstoff, nicht umgesetzten Chlorwasserstoff und Wasserdampf enthält. Der Produktgasstrom 6 wird in den Rückführstrom 6a und den Produktgasstrom 6b zur weiteren Aufbereitung aufgetrennt. Der Produktgasstrom 6b wird in einen Quenchkühler 7 eingeleitet, um Salzsäure 9 auszukondensieren. Optional kann Wasser 8 als Quenchmittel in den Quenchkühler eingespeist werden und kann ein Teilstrom 9a der verdünnten Salzsäure als Quenchmittel in den Quenchkühler zurückgeführt werden. Den Quenchkühler 7 verlässt ein im wesentlichen von Chlorwasserstoff befreiter Strom 10 aus Chlor, Sauerstoff und Wasserdampf, der einer Trocknungsstufe 11 zugeleitet wird. In der Trocknungsstufe 11 wird der Gasstrom 10 mit einem geeigneten Absorptionsmittel wie Schwefelsäure, Molsieben oder weiteren hygroskopischen Adsorbentien in Kontakt gebracht und so von Wasserspuren befreit. Optional ist der Trocknungsstufe 11 ein De-Mister 13 nachgeschaltet, in dem der getrocknete Gasstrom 12 von mitgerissenen Flüssigkeitspartikeln befreit wird. Ein De-Mister ist bevorzugt vorgesehen, falls die Trocknungsstufe 11 eine Absorption an Schwefelsäure beinhaltet. Der getrocknete und gegebenenfalls von Flüssigkeitspartikeln befreite Gasstrom 14 aus Chlor und Sauerstoff wird der Destillationsstufe 15 zugeführt, in der Sauerstoff abgetrennt und als Rückstrom 17 in den Chlorwasserstoff-Oxidationsreaktor zurückgeführt wird. Es wird ein Produktstrom 16 aus Chlor erhalten. Um die Aufpegelung von inerten Gasbestandteilen wie Stickstoff, Argon (gegebenenfalls aus dem Sauerstoff enthaltenden Einspeisungsstrom 4, falls kein reiner Sauerstoff eingesetzt wird) zu vermeiden, ist ein Purge-Strom 17a vorgesehen.

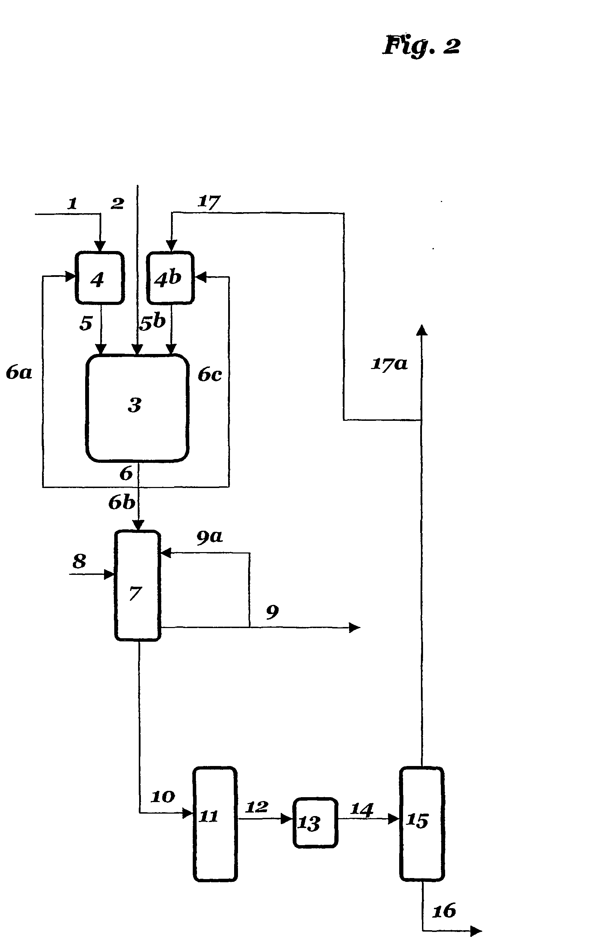

Figur 2 zeigt eine Variante des Verfahrens gemäß Figur 1, bei dem der Sauerstoff enthaltende Rückstrom 17 dazu eingesetzt wird, um mittels einer zweiten Treibstrahldüse 4b einen weiteren Rückstrom 6c anzusaugen.

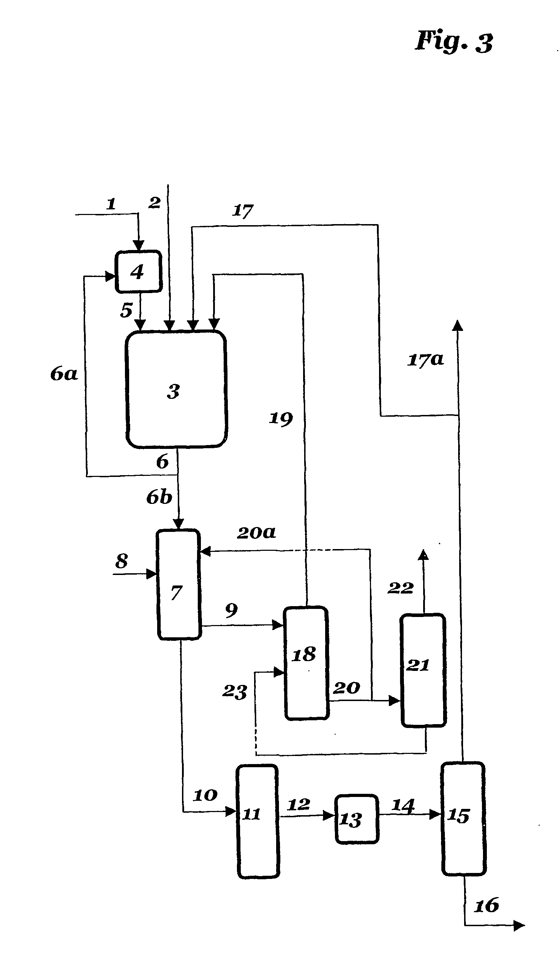

Figur 3 zeigt eine weitere Variante des Verfahrens gemäß Figur 1. Dabei wird der Produktgasstrom 6b in einen Phasenkontaktapparat 7 eingeleitet und dort mit verdünnter Salzsäure 20a und gegebenenfalls Wasser in Kontakt gebracht. Der mit dem abgetrennten Chlorwasserstoff beladene Strom 9 aus höher konzentrierter Salzsäure wird der Desorptionskolonne 18 zugeführt, in der der absorbierte Chlorwasserstoff wieder freigesetzt wird und als Rückstrom 19 dem Chlorwasserstoff-Oxidationsreaktor 5 zugeführt wird. Die bei der Desorption gewonnene verdünnte Salzsäure 20 wird zum Teil in den Phasenkontaktapparat 7 zurückgeführt, zum Teil einer Destillationskolonne 21 zugeführt. Dort wird unter vermindertem Druck destilliert, um das Azeotrop zu brechen. Es werden Wasser 22 und konzentrierte Salzsäure 23 erhalten, die in die Desorptionskolonne 18 zurückgeführt wird, um weiteren Chlorwasserstoff freizusetzen.

## Patentansprüche

1. Verfahren zur Herstellung von Chlor durch katalytische Gasphasen-Oxidation von Chlorwasserstoff an einem Katalysator-Festbett mit den Schritten:
a) ein Einspeisungsgastrom I enthaltend Chlorwasserstoff und ein Einspeisungsgasstrom II enthaltend Sauerstoff werden bereitgestellt;
b) der Einspeisungsgastrom I, der Einspeisungsgasstrom II, gegebenenfalls ein Chlorwasserstoff enthaltender Rückstrom Ia, gegebenenfalls ein Sauerstoff enthaltender Rückstrom IIa und ein Rückstrom III werden in eine Oxidationszone eingespeist und Chlorwasserstoff in Gegenwart eines im Festbett angeordneten Katalysators zu Chlor oxidiert, wobei ein Produktgasstrom IV erhalten wird, der Chlor, nicht umgesetzten Sauerstoff, nicht umgesetzten Chlorwasserstoff und Wasserdampf enthält;
c) der Rückstrom III wird dem Produktgasstrom IV entnommen und in die Oxidationszone rückgeführt, wobei ein Produktgasstrom IVa verbleibt.

2. Verfahren nach Anspruch 1, **dadurch gekennzeichnet, dass** das Verhältnis der Ströme III/IVa von 0,005 bis 3, bevorzugt von 0,2 bis 1,5 und besonders bevorzugt von 0,4 bis 1 beträgt.

3. Verfahren nach Anspruch 1 oder 2, **dadurch gekennzeichnet, dass** der Rückstrom III von einem oder mehreren der Gasströme I, II und gegebenenfalls IIa mittels einer Treibstrahldüse angesaugt wird.

4. Verfahren nach Anspruch 3, **dadurch gekennzeichnet, dass** der Rückstrom III von dem Einspeisungsstrom II angesaugt wird.

5. Verfahren nach Anspruch 4, **dadurch gekennzeichnet, dass** der Einspeisungsgasstrom II technischen Sauerstoff, der durch Luftverflüssigung erhalten wird und somit unter einem hohen Eigendruck steht, enthält.

6. Verfahren nach einem der Ansprüche 1 bis 5 mit den zusätzlichen Schritten:
d) aus dem Produktgasstrom IVa werden Chlorwasserstoff und Wasser abgetrennt, wobei ein Gasstrom V erhalten wird;
e) der Gasstrom V wird getrocknet;
f) aus dem Gasstrom V wird ein Sauerstoff enthaltender Strom abgetrennt und gegebenenfalls zumindest teilweise als Sauerstoff enthaltender Rückstrom IIa in die Oxidationszone zurückgeführt, wobei ein chlorhaltiger Produktstrom VI verbleibt;
g) gegebenenfalls wird der chlorhaltige Produktstrom VI weiter aufgereinigt.

7. Verfahren nach einem der Ansprüche 1 bis 6, **dadurch gekennzeichnet, dass** der in Schritt b) eingesetzte Katalysator Rutheniumoxid auf einem Träger, ausgewählt aus Siliziumdioxid, Aluminiumoxid, Titandioxid oder Zirkondioxid, enthält.

## Claims

1. A process for preparing chlorine by catalytic gas-phase oxidation of hydrogen chloride over a fixed catalyst bed, which comprises the steps:
a) making available a feed gas stream I comprising hydrogen chloride and an oxygen-containing feed gas stream II;
b) feeding the feed gas stream I, the feed gas stream II, if appropriate a recycled stream Ia comprising hydrogen chloride, if appropriate an oxygen-comprising recycle stream IIa and a recycle stream III into an oxidation zone and oxidizing hydrogen chloride to chlorine in the presence of a catalyst present in a fixed bed to give a product gas stream IV comprising chlorine, unreacted oxygen, unreacted hydrogen chloride and water vapor;
c) taking the recycle stream III from the product gas stream IV and recirculating it to the oxidation zone, leaving a product gas stream IVa.

2. The process according to claim 1, wherein the ratio of the streams III/IVa is from 0.005 to 3, preferably from 0.2 to 1.5 and particularly preferably from 0.4 to 1.

3. The process according to claim 1 or 2, wherein the recycle stream III is drawn in by one or more of the gas streams I, II and, if appropriate, IIa by means of a jet nozzle.

4. The process according to claim 3, wherein the recycle stream III is drawn in by the feed stream II.

5. The process according to claim 4, wherein the feed gas stream II comprises technical-grade oxygen which is obtained by liquefaction of air and is thus under a high intrinsic pressure.

6. The process according to any of claims 1 to 5 comprising the additional steps:
d) separating off hydrogen chloride and water from the product gas stream IVa to give a gas stream V;
e) drying the gas stream V;
f) separating off an oxygen-comprising stream from the gas stream V and, if appropriate, recirculating at least part of it as oxygen-comprising recycle stream IIa to the oxidation zone, leaving a chlorine-containing product stream VI;
g) if appropriate, further purifying the chlorine-containing product stream VI.

7. The process according to any of claims 1 to 6, wherein the catalyst used in step b) comprises ruthenium oxide on a support selected from among silicon dioxide, aluminum oxide, titanium dioxide and zirconium dioxide.

## Revendications

1. Procédé de préparation de chlore par oxydation catalytique en phase gazeuse de chlorure d'hydrogène sur un lit fixe de catalyseur, comportant les étapes :
a) on prépare un courant gazeux d'alimentation I contenant du chlorure d'hydrogène et un courant gazeux d'alimentation II contenant de l'oxygène,
b) on alimente dans une zone d'oxydation le courant gazeux d'alimentation I, le courant gazeux d'alimentation II, éventuellement un courant de reflux Ia contenant du chlorure d'hydrogène, éventuellement un courant de reflux IIa contenant de l'oxygène et un courant de reflux III et on oxyde le chlorure d'hydrogène en chlore en présence d'un catalyseur agencé dans un lit fixe, un courant gazeux produit IV étant obtenu, qui contient du chlore, de l'oxygène n'ayant pas réagi, du chlorure d'hydrogène n'ayant pas réagi et de la vapeur d'eau,
c) le courant de reflux III est prélevé du courant gazeux produit IV et est retourné dans la zone d'oxydation, un courant gazeux produit IVa subsistant.

2. Procédé suivant la revendication 1, **caractérisé en ce que** le rapport entre les courants III/IVa est de 0,005 à 3, de préférence de 0,2 à 1,5 et particulièrement avantageusement de 0,4 à 1.

3. Procédé suivant la revendication 1 ou 2, **caractérisé en ce que** le courant de reflux III est aspiré par un ou plusieurs des courants gazeux I, II et éventuellement IIa au moyen d'une tuyère à jet de propulsion.

4. Procédé suivant la revendication 3, **caractérisé en ce que** le courant de reflux III est aspiré par le courant gazeux d'alimentation II.

5. Procédé suivant la revendication 4, **caractérisé en ce que** le courant gazeux d'alimentation II contient de l'oxygène industriel, qui est obtenu par liquéfaction d'air et se trouve, par conséquent, sous une pression propre élevée.

6. Procédé suivant l'une des revendications 1 à 5, comportant les étapes additionnelles :
d) on sépare du courant gazeux produit IVa du chlorure d'hydrogène et de l'eau, en obtenant un courant gazeux V,
e) on sèche le courant gazeux V,
f) on sépare du courant gazeux V un courant contenant de l'oxygène et on le recycle éventuellement au moins partiellement dans la zone d'oxydation comme courant de reflux contenant de l'oxygène IIa, un courant de produit chloré VI subsistant,
g) on purifie éventuellement davantage le courant de produit chloré VI.

7. Procédé suivant l'une des revendications 1 à 6, **caractérisé en ce que** le catalyseur mis en oeuvre dans l'étape b) contient de l'oxyde de ruthénium sur un support choisi parmi du dioxyde de silicium, de l'oxyde d'aluminium, du dioxyde de titane ou du dioxyde de zirconium.
